# EUROPEAN PATENT APPLICATION

(11) **EP 4 827 201 A1**
(43) Date of publication of application: **21.10.2026**
(21) Application number: 24910694.9
(22) Date of filing: 10.12.2024
(51) Int. Cl.: H04W 72/0453

(54) **SIGNAL TRANSMISSION METHOD AND, APPARATUS, AND SYSTEM**

(30) Priority: 29.12.2023 CN 202311870770
(71) Applicant: Huawei Technologies Co., Ltd., Shenzhen, Guangdong 518129 (CN)
(72) Inventor: LIU, Chengxiao, Shenzhen, Guangdong 518129 (CN); GONG, Mingxin, Shenzhen, Guangdong 518129 (CN)
(74) Representative: Körber, Martin Hans
(86) International application number: PCT/CN2024/138148
(87) International publication number: WO 2025/139763

(57) **Abstract**

This application provides a data transmission method, apparatus, and system, applied to the field of communications technologies. The data transmission method provided in this application includes: obtaining first indication information, wherein the first indication information is used to indicate a frequency domain resource occupied by at least one first uplink signal; sending at least one first uplink signal in a first BWP; and sending at least one second uplink signal in a second BWP; where a start time of a time domain symbol for sending the at least one first uplink signal is not later than a start time of a time domain symbol for sending the at least one second uplink signal, and a frequency domain resource of the first BWP is different from a frequency domain resource of the second BWP.

## Description

This application claims priority to Chinese Patent Application No. 202311870770.7, filed with the China National Intellectual Property Administration on December 29, 2023, and entitled "Signal Transmission Method, Apparatus, and System," which is incorporated herein by reference in its entirety.

### Technical Field

This application relates to the field of communication technologies, and in particular, to a signal transmission method, apparatus, and system.

### Background

Terminal devices in 5G New Radio (NR) generally have a high demand for uplink data transmission rates. Due to the limited bandwidth of the terminal devices, an NR network device usually needs to allocate different uplink data transmission bandwidths, that is, uplink bandwidth part (BWP), to different terminal devices. Before transmitting data in the uplink, an uplink channel quality indicator (CQI) needs to be calculated based on a channel measurement result, so as to determine a modulation and coding scheme (MCS) level for uplink data transmission. The measurement result of the uplink CQI is related to the signal's signal to interference plus noise ratio (SINR), and is limited by the strength of the interfering signal. Since scheduling situations in different cells in the frequency domain are different, the interference strength on different resource blocks (RBs) in the frequency domain is also different. If an RB within the BWP currently used by a terminal device experiences strong signal interference from other terminal devices, the uplink BWP currently used by the terminal device needs to be switched to another new BWP, thereby reducing the impact of the interference signal on the uplink data transmission rate.

When an uplink BWP switching occurs on a terminal device, a frequency domain location of an interference measurement reference signal sent by the terminal device does not match a frequency domain location of a physical uplink shared channel (PUSCH) scheduled on a BWP after the switching, resulting in a mismatch between an interference strength currently measured and an interference strength at a future PUSCH scheduling time.

### Summary

Embodiments of this application provide a signal transmission method, apparatus, and system, to resolve a problem of a frequency domain location mismatch of a PUSCH scheduled on a BWP after a terminal device performs switching.

To achieve the foregoing objective, the embodiments of this application use the following technical solutions:
According to a first aspect, a signal transmission method is provided. The method may be performed by a terminal device, or may be performed by a component (for example, a processor, a chip, or a chip system) of the terminal device, or may be implemented by a logical module or software that can implement all or some functions of the terminal device. The following uses an example in which the terminal device is an execution body of the method for description. The method includes: obtaining first indication information, where the first indication information is used to indicate a frequency domain resource occupied by at least one first uplink signal; sending at least one first uplink signal in a first BWP; and sending at least one second uplink signal in a second BWP, where a time domain symbol start time for sending the at least one first uplink signal is not later than a time domain symbol start time for sending the at least one second uplink signal, and frequency domain resources of the first BWP and the second BWP are different.

By using the foregoing method, the first uplink signal is sent on a BWP different from the BWP before the switching, so that the network device can more accurately estimate uplink channel quality by measuring the first uplink signal, thereby determining more accurate uplink scheduling information (for example, an MCS level), and improving an uplink throughput.

In a possible implementation, the transmit power of the first uplink signal is determined based on the number of subcarriers and/or the subcarrier spacing included in the first BWP and the second BWP.

In a possible implementation, the method further includes: receiving configuration information, where the configuration information includes the number of subcarriers and/or the subcarrier spacing of the first BWP.

In a possible implementation, the method further includes: receiving second indication information, where the second indication information indicates a frequency domain resource occupied by the first BWP.

In a possible implementation, the method further includes: receiving third indication information, where the third indication information indicates scheduling information of a third uplink signal.

In a possible implementation, the method further includes: sending a third uplink signal in the first BWP based on the scheduling information.

In a possible implementation, a start time of a time domain symbol for sending the third uplink signal is not earlier than a start time of a time domain symbol for sending the second uplink signal.

In a possible implementation, the transmit power of the first uplink signal is P1, the transmit power of the second uplink signal is P2, the difference between the transmit power of the first uplink signal and the transmit power of the second uplink signal is ΔP, and ΔP=P1-P2.

In a possible implementation, the difference between the transmit power of the first uplink signal and the transmit power of the second uplink signal ΔP satisfies the following formula: $ΔP = 10 log 10 \left(\frac{Δ {f}_{1}}{Δ {f}_{2}}\frac{{N}_{RE}^{{BWP}_{1}}}{{N}_{RE}^{{BWP}_{2}}}\right) dB$

The subcarrier spacing of the first BWP is Δf1, and the subcarrier spacing of the second BWP is Δf2.In a possible implementation, the first uplink signal and/or the second uplink signal are used to calculate an uplink channel quality indicator CQI, and the scheduling information is determined based on the CQI or the first uplink signal.

According to a second aspect, a signal transmission method is provided. The method may be performed by a network device, or may be performed by a component (for example, a processor, a chip, or a chip system) of a terminal device, or may be implemented by a logical module or software that can implement all or some functions of the terminal device. The following uses an example in which a terminal device is an execution body of the method for description. The method includes: sending first indication information, where the first indication information is used to indicate a frequency domain resource occupied by at least one first uplink signal; receiving the at least one first uplink signal in a first BWP; and receiving the at least one second uplink signal in a second BWP, where a frequency domain resource of the first BWP is different from a frequency domain resource of the second BWP.

By using the foregoing method, the first uplink signal is sent on a BWP different from the BWP before the switching, so that the network device can more accurately estimate uplink channel quality by measuring the first uplink signal, thereby determining more accurate uplink scheduling information (for example, an MCS level), and improving an uplink throughput.

In a possible implementation, the transmit power of the first uplink signal is determined based on the number of subcarriers and/or the subcarrier spacing included in the first BWP and the second BWP.

In a possible implementation, the method further includes: sending configuration information, where the configuration information includes the number of subcarriers and/or the subcarrier spacing of the first BWP.

In a possible implementation, the method further includes: sending second indication information, where the second indication information indicates the frequency domain resource occupied by the first BWP.

In a possible implementation, the method further includes: sending third indication information, where the third indication information indicates scheduling information of the third uplink signal.

In a possible implementation, the method further includes: receiving a third uplink signal in the first BWP.

In a possible implementation, the transmit power of the first uplink signal is P1, the transmit power of the second uplink signal is P2, the difference between the transmit power of the first uplink signal and the transmit power of the second uplink signal is ΔP, and ΔP=P1-P2.

In a possible implementation, the difference between the transmit power of the first uplink signal and the transmit power of the second uplink signal ΔP satisfies the following formula: $ΔP = 10 log 10 \left(\frac{Δ {f}_{1}}{Δ {f}_{2}}\frac{{N}_{RE}^{{BWP}_{1}}}{{N}_{RE}^{{BWP}_{2}}}\right) dB$ where the subcarrier spacing of the first BWP is Δf1, and the subcarrier spacing of the second BWP is Δf2.In a possible implementation, the first uplink signal and/or the second uplink signal are used to calculate an uplink channel quality indicator CQI, and the scheduling information is determined based on the CQI or the first uplink signal.

According to a third aspect, a communications apparatus is provided. The communications apparatus includes a processor, where the processor is coupled to a memory, the memory is configured to store a computer-executable instruction, and the processor is configured to execute the instruction stored in the memory; and when the instruction is run by the processor, the communications apparatus is enabled to perform the method in the first aspect.

According to a fourth aspect, a communications apparatus is provided. The communications apparatus includes a processor, where the processor is coupled to a memory, the memory is configured to store a computer-executable instruction, and the processor is configured to execute the instruction stored in the memory; and when the instruction is run by the processor, the communications apparatus is enabled to perform the method in the second aspect.

According to a fifth aspect, a computer-readable storage medium is provided, where a computer program is stored on the computer-readable storage medium, and when the computer program is executed by a computer, the method in the first aspect or the second aspect is performed.

According to a sixth aspect, a communications system is provided. The communications system includes a terminal device and a network device. The terminal device is configured to perform the method in the first aspect, and the network device is configured to perform the method in the second aspect.

It should be understood that the descriptions of technical features, technical solutions, beneficial effects, or similar language in this application do not imply that all the features and advantages can be achieved in any single embodiment. On the contrary, it may be understood that the description of a feature or beneficial effect means that the specific technical feature, technical solution, or beneficial effect is included in at least one embodiment. Therefore, the descriptions of technical features, technical solutions, or beneficial effects in this specification do not necessarily refer to the same embodiment. In addition, the technical features, technical solutions, and beneficial effects described in embodiments may be combined in any appropriate manner. A person skilled in the art will understand that an embodiment may be implemented without one or more specific technical features, technical solutions, or beneficial effects of a particular embodiment. In other embodiments, additional technical features and beneficial effects may be identified in an embodiment without all the specific technical features, technical solutions, or beneficial effects of embodiments being embodied.

### Brief Description of the Drawings

FIG. 1 is a schematic diagram of an architecture of a network system according to an embodiment of this application;
FIG. 2 is a schematic structural diagram of a communication apparatus according to an embodiment of this application;
FIG. 3a is a schematic interaction diagram of a data transmission method according to an embodiment of this application;
FIG. 3b is a schematic interaction diagram of another data transmission method according to an embodiment of this application;
FIG. 3c is a schematic interaction diagram of still another data transmission method according to an embodiment of this application;
FIG. 3d is a schematic interaction diagram of still another data transmission method according to an embodiment of this application;
FIG. 3e is a schematic interaction diagram of still another data transmission method according to an embodiment of this application;
FIG. 4 is a schematic interaction diagram of a data transmission method according to an embodiment of this application;
FIG. 5a is a time-frequency resource configuration diagram according to an embodiment of this application;
FIG. 5b is another time-frequency resource configuration diagram according to an embodiment of this application;
FIG. 6 is a schematic interaction diagram of another data transmission method according to an embodiment of this application;
FIG. 7a is a schematic diagram of another data transmission method according to an embodiment of this application;
FIG. 7b is a schematic diagram of another data transmission method according to an embodiment of this application;
FIG. 8a is a time-frequency resource distribution diagram according to an embodiment of this application;
FIG. 8b is another time-frequency resource distribution diagram according to an embodiment of this application;
FIG. 8c is another time-frequency resource distribution diagram according to an embodiment of this application;
FIG. 8d is another time-frequency resource distribution diagram according to an embodiment of this application;
FIG. 8e is another time-frequency resource distribution diagram according to an embodiment of this application;
FIG. 8f is another time-frequency resource distribution diagram according to an embodiment of this application;
FIG. 8g is another time-frequency resource distribution diagram according to an embodiment of this application;
FIG. 9 is a schematic structural diagram of a communications apparatus according to an embodiment of this application;
FIG. 10 is a schematic structural diagram of a simplified terminal according to an embodiment of this application;
FIG. 11 is a schematic structural diagram of a simplified network device according to an embodiment of this application;
FIG. 12 is a schematic structural diagram of another communications apparatus according to an embodiment of this application.

### Specific Implementation

The following will describe the technical solutions in embodiments of this application with reference to the accompanying drawings in embodiments of this application. In the description of this application, unless otherwise specified, "/" indicates an "or" relationship between associated objects. For example, A/B may represent A or B. The term "and/or" in this application merely describes an association relationship between associated objects and indicates that three relationships may exist. For example, A and/or B may represent the following three cases: only A exists, both A and B exist, and only B exists, where A and B may be singular or plural. In addition, in the description of this application, unless otherwise specified, "a plurality of' means two or more. "At least one of the following items (pieces)" or a similar expression thereof refers to any combination of these items, including any combination of singular items (pieces) or plural items (pieces). For example, "at least one of a, b, or c" may represent: a, b, c, a-b, a-c, b-c, or a-b-c, where a, b, and c may each be singular or multiple. In addition, to clearly describe the technical solutions in embodiments of this application, terms such as "first" and "second" are used in embodiments of this application to distinguish between identical or similar items that have basically the same functions or purposes. A person skilled in the art may understand that the terms such as "first" and "second" do not limit a quantity or an execution sequence, and the terms such as "first" and "second" also do not indicate any different. In addition, in embodiments of this application, the terms such as "example" or "for example" are used to indicate an example, an illustration, or a description. Any embodiment or design scheme described as "an example" or "for example" in embodiments of this application should not be explained as being more preferred or having more advantages than another embodiment or design scheme. On the contrary, the use of the terms such as "example" or "for example" is intended to present a related concept in a specific manner for ease of understanding.

The resource allocation method provided in the embodiments of this application may be applicable to various communications systems. For example, the resource allocation method provided in the embodiments of this application may be applied to a 3rd Generation Partnership Project (3rd generation partnership project, 3GPP) communications system, for example, a Long Term Evolution (long term evolution, LTE) system, a 5th generation (5th generation, 5G) system, an Internet of Vehicles (vehicle to everything, V2X) system, a system of hybrid networking of LTE and NR, a device-to-device (device-to-device, D2D) system, a machine-to-machine (machine to machine, M2M) communications system, or an Internet of Things (Internet of Things, IoT) system. Alternatively, the communications system may be a non-3GPP communications system, or another future-oriented similar new communications system, for example, a sixth generation (sixth-generation, 6G) system. This is not specifically limited in embodiments of this application. In addition, the terms "system" and "network" may be used interchangeably.

In the embodiments of this application, the terminal device may be referred to as UE, and the network device may be referred to as a base station or a gNB.

It should be noted that the network architecture and the service scenario described in the embodiments of this application are used to describe the technical solutions in the embodiments of this application more clearly, but do not constitute a limitation on the technical solutions provided in the embodiments of this application. A person of ordinary skill in the art may know that: With evolution of a network architecture and emergence of a new service scenario, the technical solutions provided in the embodiments of this application are also applicable to similar technical problems.

Optionally, the network device in this embodiment of this application is a device for connecting a terminal device to a wireless network. The network device in the embodiments of this application may include base stations (base stations) in various forms, for example, a macro base station, a micro base station (also referred to as a small cell), a relay station, an access point, a transmitting point (transmitting point, TP), or an evolved NodeB (evolved NodeB). eNodeB), a transmission reception point (transmission reception point, TRP), a next generation NodeB (next generation NodeB) in a 5G mobile communications system, gNB), a device that implements a base station function in a communications system evolved after 5G, a mobile switching center, a device-to-device (Device-to-Device, D2D), a vehicle external (vehicle-to-everything, V2X), and a machine-to-machine (machine-to-machine, a device that undertakes a function of a base station in M2M communication, and the like; or may be a network device in the NTN communications system, that is, may be deployed on a high-altitude platform or a satellite; or may be a module or a unit that completes some functions of the base station, for example, may be a centralized unit (central unit, CU) in a cloud access network (cloud radio access network, C-RAN) system, or may be a distributed unit (distributed unit, DU). or may be a radio unit (Radio unit, RU), for example, may be a CU, a DU, or an RU in an O-RAN architecture. A specific technology used by the network device and a specific device form are not limited in this embodiment of this application. All or some functions of the network device may also be implemented by using a software function running on hardware, or implemented by using a virtualization function or a service-oriented function instantiated on a platform (for example, a cloud platform).

In another possible scenario, multiple network devices collaborate to assist a terminal in achieving wireless access, where different network devices respectively implement some functions of the access network. For example, the network device in this application may be composed of multiple network devices, and is not limited to a single network device. The functions implemented by the network device in this application may also be implemented by multiple network devices, or partially implemented by some of the multiple network devices. For instance, the network device may be a central unit (central unit, CU), a distributed unit (distributed unit, DU), a CU-control plane (control plane, CP), a CU-user plane (user plane, UP), a radio unit (radio unit, RU), or the like. The CU and DU may be separately disposed, or may be included in the same network element, for example, in a baseband unit (baseband unit, BBU). The RU may be included in a radio frequency device or a radio frequency unit, for example, in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand meanings thereof. For example, in the ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, a CU, a CU-CP, a CU-UP, a DU, and an RU are used as examples for description in this application. Any one of the CU (or the CU-CP, the CU-UP), the DU, and the RU in this application may be implemented by using a software module, a hardware module, or a combination of a software module and a hardware module.

Optionally, the terminal device in this embodiment of this application may be a device with a wireless transceiver function, or may be referred to as a terminal (terminal). The terminal device may be specifically user equipment, an access terminal, a subscriber unit (subscriber unit), a subscriber station, a mobile station (mobile station), or a customer-premises equipment (customer-premises equipment), CPE), a remote station, a remote terminal, a mobile device, a mobile terminal, a user terminal, a wireless communication device, a user agent, a user device, and the like. The terminal device may also be a satellite phone, a cellular phone, a smart phone, a cordless phone, a session initiation protocol (session initiation protocol, SIP) phone, a wireless data card, a wireless modem, a tablet computer, a computer with a wireless receiving and sending function, or a wireless local loop (wireless local loop). a WLL) station, a personal digital assistant (PDA), a handheld device with a wireless communication function, a computing device or other processing device connected to a wireless modem, a vehicle-mounted device, a communication device on a high-altitude aircraft, a wearable device, a drone, a robot, a smart point of sale (point of sales (POS) machine, machine type communication device, terminal device in D2D, terminal device in V2X, virtual reality (virtual reality, VR) terminal device, augmented reality (augmented reality), AR) terminal device, a wireless terminal in industrial control, a wireless terminal in self driving, a wireless terminal in remote medical, a wireless terminal in smart grid, and transportation safety a wireless terminal in, a wireless terminal in a smart city (smart city), a wireless terminal in a smart home (smart home), a terminal device in a future communications network, and the like. A specific technology and a specific device form used by the terminal device are not limited in this embodiment of this application. All or some functions of the terminal device may also be implemented by using a software function running on hardware, or implemented by using a virtualization function or a service-oriented function instantiated on a platform (for example, a cloud platform).

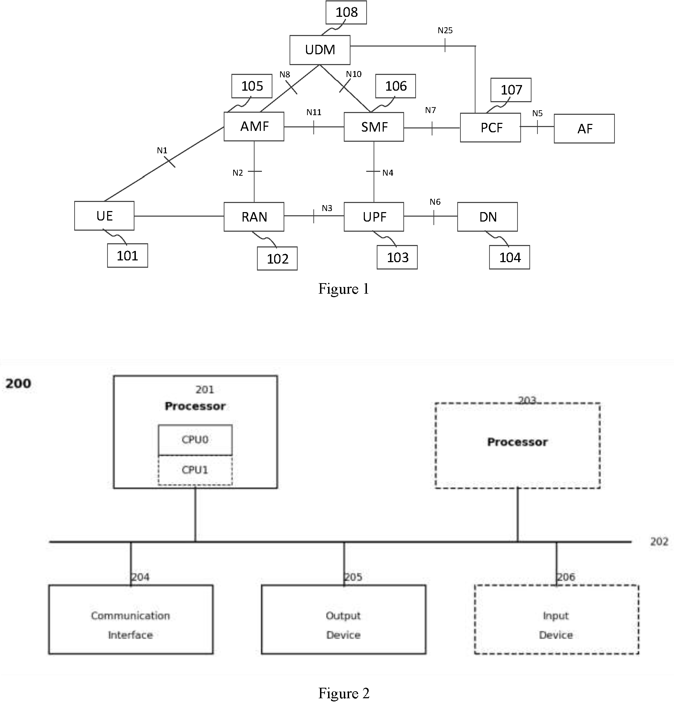

Figure 1 provides an illustration of the 5G network architecture. Below, a detailed description of the 5G network structure is provided in conjunction with Figure 1.

The 5G system architecture is divided into two parts: the access network and the core network. The access network is responsible for implementing functions related to wireless access. The core network mainly includes the following key logical network elements: Radio Access Network (RAN), Access and Mobility Management Function (AMF), Session Management Function (SMF), User Plane Function (UPF), Policy Control Function (PCF), Unified Data Management (UDM).

The UE 101 refers to a network terminal device, such as a mobile phone or an Internet of Things (IoT) terminal device.

The RAN 102 is a device that provides wireless access for the terminal device, and includes but is not limited to an eNodeB, a WiFi AP, a WiMAX BS, and the like.

The AMF 105 is mainly responsible for mobility management in a mobile network, such as user location update, user network registration, and user handover.

The SMF 106 is mainly responsible for session management in a mobile network, such as session establishment, modification, and release. Specific functions include allocating an IP address to a user, selecting a UPF 103 that provides a packet forwarding function, and the like.

The PCF 107 is responsible for providing policies, such as a QoS policy and a slice selection policy, to the AMF and the SMF.

The UDM 108 is configured to store user data, such as subscription information and authentication/authorization information.

The application function (AF) is responsible for providing a service to the 3GPP network, for example, affecting service routing, and interacting with the PCF for policy control.

The UPF 103 is mainly responsible for processing user packets, such as forwarding and charging.

The DN 104 refers to an operator network that provides a data transmission service for a user, such as an IMS (IP Multi-media Service, IP multimedia service) or an Internet.

The UE accesses the data network (DN) by establishing a PDU session (PDU session) between the UE, the RAN, the UPF, and the DN.

In the current discussions on the evolution of network architecture, there is an expectation to introduce the next step of evolution in wireless network architecture by adopting the Service-Based Architecture (SBA) for RAN, which also means introducing service-based interfaces for network equipment. The service-based RAN architecture offers the following advantages:
Service-based architecture enables end-to-end unified orchestration, such as unified service discovery and service invocation. This reduces functional coupling between network elements and accelerates the deployment of new features. From a performance perspective, the service-based RAN architecture can reduce the number of signaling transmission hops and enable faster connection establishment. Under the service-based RAN architecture, one of the current technical approaches is for the RAN to retain the user context and not release it until the UE deregisters. This architecture simplifies downlink signaling addressing (where core network elements interact directly with network devices), avoiding the path detours caused by downlink signaling and the issue of asymmetry between uplink and downlink procedures. In this network architecture, since base stations can directly connect to all core network elements, the mobility management and context management of UEs no longer need to rely on the AMF for centralized management. The RAN can manage the UE context directly, without the need to forward messages through the AMF. This technology is characterized by the direct interaction between the RAN and 5GC NFs without going through the AMF. Currently, in NR technology, there are techniques where the RAN manages the UE context and is responsible for some mobility management, such as the management of UEs in the inactive state. In this technology, the RAN manages and migrates the UE context, while being transparent to the 5GC.

Optionally, the network device, the terminal device, or the core network device in the embodiments of this application may be deployed on land, including an indoor or outdoor device, a handheld device, or a vehicle-mounted device; may be deployed on a water surface; or may be deployed on an airplane, a balloon, or a satellite in the air. An application scenario of the network device, the terminal device, or the core network device is not limited in embodiments of this application.

Optionally, the network device and the terminal device in the embodiments of this application may communicate with each other by using a licensed spectrum, may communicate with each other by using an unlicensed spectrum, or may communicate with each other by using both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz at the same time. A spectrum resource used between the network device and the terminal device is not limited in the embodiments of this application.

Optionally, the network device, the terminal device, or the core network device in the embodiments of this application may also be referred to as a communications apparatus, which may be a general-purpose device or a dedicated device. This is not specifically limited in embodiments of this application.

Optionally, in specific implementation, the terminal device, the network device, or the core network device may use the composition structure shown in FIG. 2, or include the components shown in FIG. 2. FIG. 2 is a schematic diagram of composition of a communications apparatus 200 according to this application. The communications apparatus 200 may be a terminal device or a chip or a system on chip in the terminal device; or may be a network device or a module or a chip or a system on chip in the network device; or may be a core network device or a module or a chip or a system on chip in the core network device.

As shown in FIG. 2, the communications apparatus 200 includes at least one processor 201 and at least one communications interface (FIG. 2 is merely an example for description with an example of including one communications interface 204 and one processor 201). Optionally, the communications apparatus 200 may further include a communications bus 202 and a memory 203.

The processor 201 may be a general-purpose central processing unit (CPU), a general-purpose processor, a network processor (NP), a digital signal processor (DSP), a microprocessor, a microcontroller, a programmable logic device (PLD), or any combination thereof. The processor 201 may also be another apparatus with processing functions, such as a circuit, a device, or a software module, without any limitation.

The communication bus 202 is configured to connect different components in the communication apparatus 200, so that the different components can communicate with each other. The communication bus 202 may be a peripheral component interconnect (PCI) bus, an extended industry standard architecture (EISA) bus, or the like. The bus may be divided into an address bus, a data bus, a control bus, and the like. For ease of representation, only one thick line is used to indicate the bus in FIG. 2, but this does not mean that there is only one bus or only one type of bus.

The communications interface 204 is configured to communicate with another device or a communication network. For example, the communications interface 204 may be a module, a circuit, a transceiver, or any apparatus that can implement communication. Optionally, the communications interface 204 may alternatively be an input/output interface located inside the processor 201, configured to implement signal input and signal output of the processor.

The memory 203 may be an apparatus having a storage function, and is configured to store instructions and/or data. The instruction may be a computer program.

For example, the memory 203 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, or the like), a magnetic disk storage medium, or another magnetic storage device, or the like. This is not limited.

It should be noted that the memory 203 may exist independently of the processor 201, or may be integrated with the processor 201. The memory 203 may be located inside the communication apparatus 200, or may be located outside the communication apparatus 200, which is not limited. The processor 201 may be configured to execute the instructions stored in the memory 203, to implement the methods provided in the following embodiments of this application.

In an optional implementation, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, a projector (projector), or the like. The input device 206 communicates with the processor 201, and may receive user input in a plurality of manners. For example, the input device 206 may be a mouse, a keyboard, a touchscreen device, a sensing device, or the like.

It should be noted that the structure shown in FIG. 2 does not constitute a specific limitation on the network device or the terminal device. For example, in some other embodiments of this application, the network device or the terminal device may include more or fewer components than those shown in the figure, or some components may be combined, or some components may be split, or there may be different component arrangements. The components shown in the figure may be implemented by hardware, software, or a combination of software and hardware.

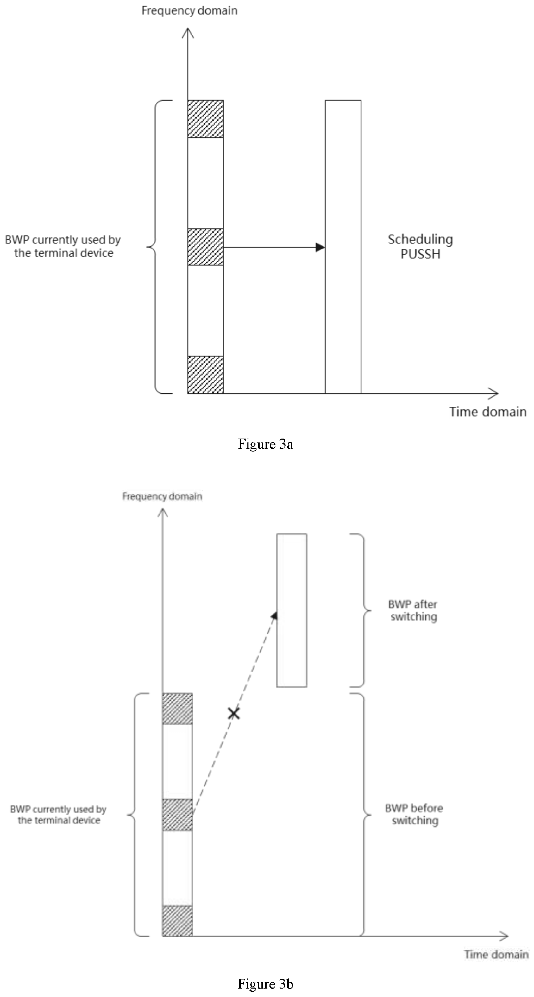

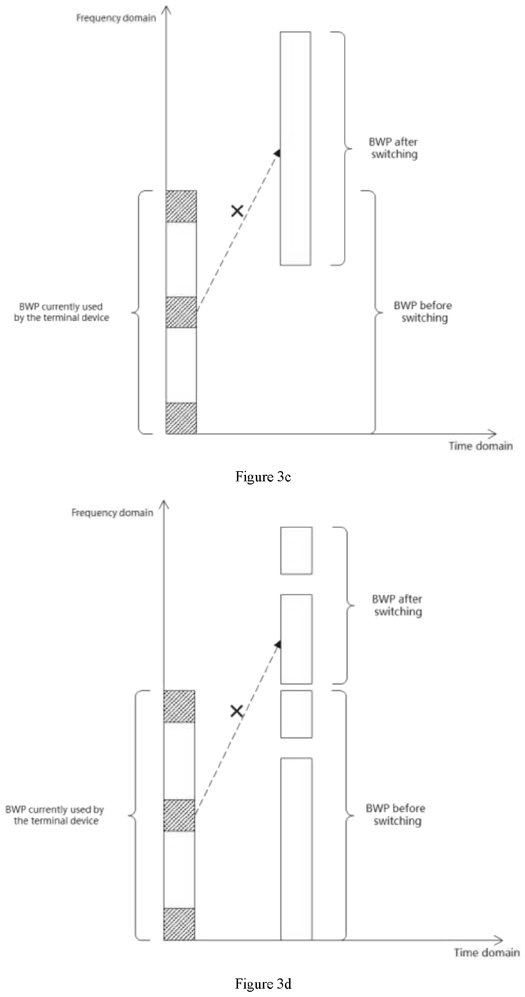

Currently, the terminal device sends, within an active uplink BWP, a reference signal used for measuring interference strength, calculates a CQI for uplink data transmission, and determines an MCS level for the uplink data, as shown in FIG. 3a. If an uplink BWP switching occurs, the frequency domain location of the interference measurement reference signal sent by the terminal device does not overlap with the frequency domain location of the PUSCH scheduled on the BWP after the switching, as shown in FIG. 3b. This results in a mismatch between the interference strength currently measured and the interference strength at a future PUSCH scheduling time. Alternatively, if an uplink BWP switching occurs, the frequency domain location of the interference measurement reference signal sent by the terminal device does not completely overlap with the frequency domain location of the PUSCH scheduled on the BWP after the switching, as shown in FIG. 3c, which may cause a mismatch between the interference strength currently measured and the interference strength at a future PUSCH scheduling time.

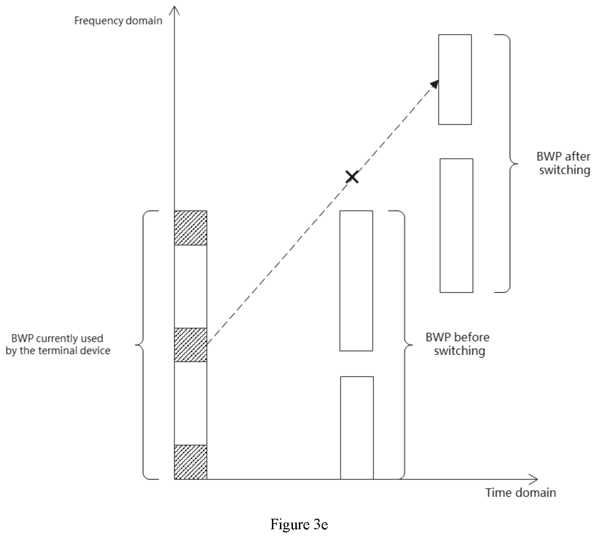

After the switching and before the switching, there may be a plurality of discontinuous BWPs simultaneously activated, or there may be discontinuous RB scheduling on one BWP, as shown in FIG. 3d and FIG. 3e.

The time-frequency resources in the shaded parts in FIG. 3a to FIG. 3e may be used to send a reference signal.

When a BWP switching occurs, a PUSCH bandwidth after the switching is outside the BWP before the switching, so that the terminal device cannot send an interference measurement reference signal on the switched BWP in future scheduling. In addition, a transmit power of the interference measurement reference signal of the terminal device cannot be set, and therefore, an interference strength currently measured is interference within the BWP before the switching instead of interference within the BWP after the switching. This causes an inaccurate uplink CQI measurement result, an inaccurate MCS level, and a decrease in a throughput rate of uplink data transmission.

This application provides a signal transmission method, where an interference measurement reference signal transmit power is determined based on a bandwidth and a subcarrier spacing of a BWP before switching and a bandwidth and a subcarrier spacing of a BWP after switching, and an interference measurement reference signal is sent on all or some RBs of the BWP after switching.

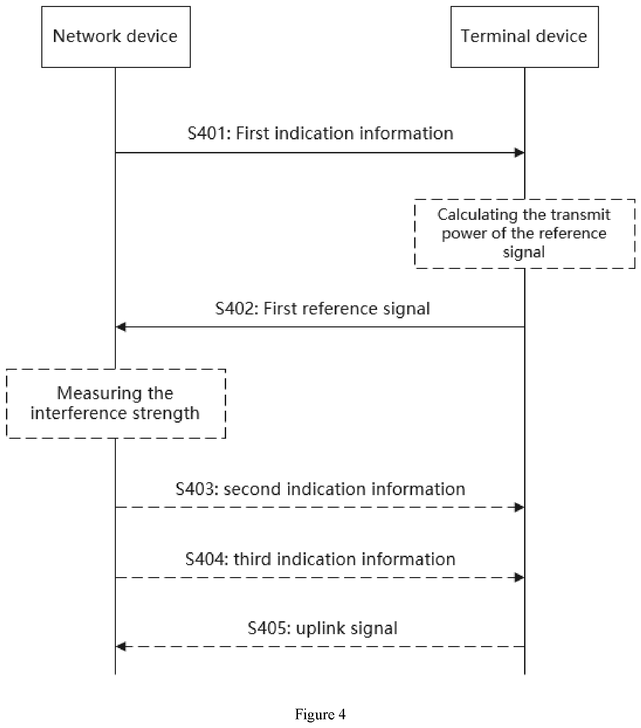

The following describes embodiments of the present invention with reference to FIG. 4.

FIG. 4 is a signal transmission method according to the present invention, and the method includes the following steps:
S401: A network device sends first indication information to a terminal device, and the terminal device obtains the first indication information, where the first indication information is used to indicate a frequency domain resource occupied by one or more first bandwidth parts BWPs and/or a system parameter of one or more first BWPs.

Optionally, the first indication information may also be used to indicate the quantity of subcarriers and/or the subcarrier spacing included in the one or more BWPs.

Specifically, the BWP may also be referred to as a signal bandwidth, or the BWP may be another signal bandwidth defined.

Specifically, the first indication information may be sent by using signaling or a signal such as RRC signaling, DCI, or a MAC CE.

Specifically, the system parameters refer to the subcarrier spacing and the CP length. For example, the first indication information may indicate that the subcarrier spacing of the first BWP is 60 kHz and an extended CP (Extended CP) is used, or indicate that the subcarrier spacing of the first BWP is 30 kHz and a normal CP (Normal CP) is used.

Optionally, the first indication information may be used to configure a signal bandwidth candidate set for the terminal device. Using an example in which the signal bandwidth is a BWP, the network device may configure a BWP candidate set for the terminal device in advance by using the first indication information. The BWP candidate set may include a plurality of BWPs available to the terminal device, and a quantity of resource blocks (RBs) and/or a subcarrier spacing corresponding to the plurality of BWPs.

For example, the BWP candidate set may include a BWP 1 and a BWP 2, where an RB number included in the BWP 1 is 0 to 23, and an RB number included in the BWP 2 is 16 to 31. Alternatively, an RB number included in the BWP 1 is 0 to 31 and 64 to 127, and an RB number included in the BWP 2 is 30 to 63 and 126 to 255.

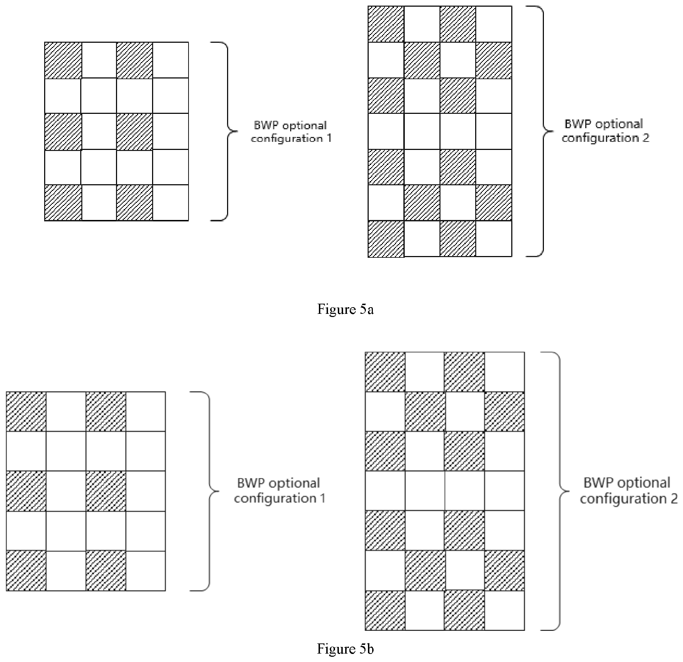

In some implementations, each BWP in the BWP candidate set corresponds to interference measurement reference signals with a same time-frequency granularity, as shown in FIG. 5a; or, in some embodiments, each BWP in the BWP candidate set corresponds to interference measurement reference signals with different time domain granularities and/or frequency domain granularities, as shown in FIG. 5b.

S402: The terminal device sends a first reference signal in the first BWP, where transmit power of the first reference signal is associated with a quantity of subcarriers and/or a subcarrier spacing included in the first BWP and the second BWP, and the first BWP is different from the second BWP.

Specifically, the quantity of subcarriers and/or the subcarrier spacing of the first BWP and the second BWP may be included in the quantity of subcarriers and/or the subcarrier spacing of one or more BWPs indicated by the first indication information. For example, the first indication information may indicate that the first BWP includes 32 RBs, the subcarrier spacing is 60 kHz, and an extended CP is used, while also indicating that the second BWP includes 64 RBs, and the subcarrier spacing and CP are the same as those of the first BWP. For another example, the first indication information may indicate that the first BWP includes 32 RBs, the subcarrier spacing is 60 kHz, and an extended CP is used, while also indicating that the second BWP includes 64 RBs, the subcarrier spacing is 30 kHz, and a normal CP is used.

Specifically, the first indication information may indicate the action of switching the BWP, or the first indication information may indicate to perform BWP switching. The first BWP is a signal bandwidth after the switching, and the second BWP is a signal bandwidth before the switching.

Specifically, that the first BWP is different from the second BWP may be understood as that the first BWP and the second BWP do not overlap or partially overlap, or frequency domain units (RE) corresponding to the first BWP and frequency domain units corresponding to the second BWP are different or partially the same.

For example, if an RB number included in the BWP1 is 0 to 23, and an RB number included in the BWP2 is 16 to 31, the BWP1 is different from the BWP2.

For another example, if an RB number included in the BWP1 is 0 to 31 and 64 to 127, and an RB number included in the BWP2 is 30 to 63 and 126 to 255, the BWP1 is different from the BWP2.

For another example, if an RB number included in the BWP1 is 0 to 12, and an RB number included in the BWP2 is 0 to 11, the BWP1 is different from the BWP2.

For another example, if the RE numbers included in the BWP1 are 0 to 255, and the RE numbers included in the BWP2 are 0 to 254, the BWP1 is different from the BWP2.

Specifically, the second BWP may be a BWP currently used by the terminal device.

Specifically, the reference signal may be used to measure an interference signal, for example, measuring an interference strength of a neighboring cell signal. Then, the calculation result may be used to calculate a signal to interference plus noise ratio SINR, to obtain an uplink channel quality indicator CQI. For example, if the SINR=-10 dB is obtained through measurement of the reference signal, the corresponding CQI=3 may be calculated.

The reference signal may be a CSI-RS, an SRS, a DMRS, or an interference measurement reference signal.

After obtaining the transmit power of the reference signal, the terminal device sends the first reference signal to the network device on the first BWP, where the transmit power of the first reference signal is associated with the quantity of subcarriers and/or the subcarrier spacing included in the first BWP and the second BWP.

Specifically, the transmit power of the first reference signal is associated with the quantities of subcarriers and/or the subcarrier spacings included in the first BWP and the second BWP. For example, after obtaining the quantities of subcarriers and/or the subcarrier spacings included in the one or more BWPs, the terminal device may calculate the transmit power of the reference signal based on the quantities of subcarriers and/or the subcarrier spacings of the first BWP and the quantities of subcarriers and/or the subcarrier spacings of the second BWP.

The following describes how to calculate the transmit power of the first reference signal.

The transmit power of the first reference signal is P1, the transmit power of the second reference signal is P2, the difference between the transmit power of the first reference signal and the transmit power of the second reference signal is ΔP, ΔP=P1-P2, the first reference signal is a reference signal sent on the first BWP, and the second reference signal is a reference signal sent on the second BWP.

Specifically, the difference between the transmit power of the first reference signal and the transmit power of the second reference signal ΔP satisfies the following formula: $ΔP = 10 log 10 \left(\frac{Δ {f}_{1}}{Δ {f}_{2}}\frac{{N}_{RB}^{{BWP}_{1}}}{{N}_{RB}^{{BWP}_{2}}}\right) dB$ a subcarrier spacing of the first BWP is Δ*f*₁, and a subcarrier spacing of the second BWP is Δ*f*₂*.* A quantity of RBs in the first BWP is ${N}_{RB}^{{BWP}_{1}}$, and a quantity of RBs in the second BWP is ${N}_{RB}^{{BWP}_{2}}$.

Specifically, if the quantity of RBs in the first BWP is ${N}_{RB}^{{BWP}_{1}}$, the quantity of RBs in the second BWP is ${N}_{RB}^{{BWP}_{2}}$, the subcarrier spacing of the first BWP is 2^{µ₁} *f*₀, the subcarrier spacing of the second BWP is *2*^{*µ*₂} *f*₀, and *f*₀ is a subcarrier spacing unit prespecified in a protocol, the foregoing formula may be further expressed in the following manner: $ΔP = 10 log 10 \left({2}^{{μ}_{1} - {μ}_{2}}\frac{{N}_{RB}^{{BWP}_{1}}}{{N}_{RB}^{{BWP}_{2}}}\right) dB$ $ΔP = 10 log 10 \left(Δ{f}_{1}{N}_{RB}^{{BWP}_{1}}\right) - 10 log 10 \left(Δ{f}_{2}{N}_{RB}^{{BWP}_{2}}\right) dB$ $ΔP = 10 log 10 \left(Δ{f}_{1}\right) + 10 log 10 \left({N}_{RB}^{{BWP}_{1}}\right) - 10 log 10 \left(Δ{f}_{2}\right) - 10 log 10 \left({N}_{RB}^{{BWP}_{2}}\right) dB$ $ΔP = 10 log 10 \left({2}^{{μ}_{1}}{N}_{RB}^{{BWP}_{1}}\right) - 10 log 10 \left({2}^{{μ}_{2}}{N}_{RB}^{{BWP}_{2}}\right) dB$ $ΔP = 10 log 10 \left({2}^{{μ}_{1}}{f}_{0}{N}_{RB}^{{BWP}_{1}}\right) - 10 log 10 \left({2}^{{μ}_{2}}{f}_{0}{N}_{RB}^{{BWP}_{2}}\right) dB$ $ΔP = 10 log 10 \left({2}^{{μ}_{1}}\right) + 10 log 10 \left({N}_{RB}^{{BWP}_{1}}\right) - 10 log 10 \left({2}^{{μ}_{2}}\right) - 10 log 10 \left({N}_{RB}^{{BWP}_{2}}\right) dB$

Alternatively, ΔP_dBΔP may be obtained through calculation in the foregoing manner. The dB value of ΔP indicates that the actual value of ΔP_dBΔP is ΔP = 10^{(ΔP_{dB}/10)}.

Specifically, the foregoing formula may also be written in the following form: $ΔP = 10 log 10 \left(\frac{Δ {f}_{1}}{Δ {f}_{2}}\frac{{N}_{RE}^{{BWP}_{1}}}{{N}_{RE}^{{BWP}_{2}}}\right) dB$ where the subcarrier spacing of the first BWP is Δ*f*₁, and the subcarrier spacing of the second BWP is Δ*f*₂*.* The number of REs in the first BWP is ${N}_{RE}^{{BWP}_{1}}$, and the number of REs in the second BWP is ${N}_{RE}^{{BWP}_{2}}$.

Specifically, if the number of REs in the first BWP is ${N}_{RE}^{{BWP}_{1}}$, the number of REs in the second BWP is ${N}_{RE}^{{BWP}_{2}}$, the subcarrier spacing of the first BWP is *2*^{*µ*₁} *f*₀*,* the subcarrier spacing of the second BWP is 2^{*µ*₂}*f*₀, and is a subcarrier spacing unit pre-specified in a protocol, the foregoing formula may also be written as *f*₀: $ΔP = 10 log 10 \left({2}^{{μ}_{1} - {μ}_{2}}\frac{{N}_{RE}^{{BWP}_{1}}}{{N}_{RE}^{{BWP}_{2}}}\right) dB$ $ΔP = 10 log 10 \left(Δ{f}_{1}{N}_{RE}^{{BWP}_{1}}\right) - 10 log 10 \left(Δ{f}_{2}{N}_{RE}^{{BWP}_{2}}\right) dB$ $ΔP = 10 log 10 \left(Δ{f}_{1}\right) + 10 log 10 \left({N}_{RE}^{{BWP}_{1}}\right) - 10 log 10 \left(Δ{f}_{2}\right) - 10 log 10 \left({N}_{RE}^{{BWP}_{2}}\right) dB$ $ΔP = 10 log 10 \left({2}^{{μ}_{1}}{N}_{RE}^{{BWP}_{1}}\right) - 10 log 10 \left({2}^{{μ}_{2}}{N}_{RE}^{{BWP}_{2}}\right) dB$ $ΔP = 10 log 10 \left({2}^{{μ}_{1}}{f}_{0}{N}_{RE}^{{BWP}_{1}}\right) - 10 log 10 \left({2}^{{μ}_{2}}{f}_{0}{N}_{RE}^{{BWP}_{2}}\right) dB$ $ΔP = 10 log 10 \left({2}^{{μ}_{1}}\right) + 10 log 10 \left({N}_{RE}^{{BWP}_{1}}\right) - 10 log 10 \left({2}^{{μ}_{2}}\right) - 10 log 10 \left({N}_{RE}^{{BWP}_{2}}\right) dB$

Alternatively, ΔP_dBΔP may be obtained through calculation in the foregoing manner. The dB value of ΔP indicates that the actual value of ΔP_dBΔP is ΔP = 10^{(ΔPdB/10)}.

The transmit power of the first reference signal may be calculated according to the foregoing formula, so that the first reference signal is sent on the first BWP.

In this embodiment, the first BWP is a BWP after the BWP is switched, and the second BWP is a BWP before the BWP is switched. The first reference signal is sent on the first BWP after the switching, and an accurate transmit power of the reference signal is determined according to a difference between the bandwidth of the first BWP after the switching and the bandwidth of the second BWP before the switching, thereby ensuring that an accurate interference strength on the future scheduled PUSCH is obtained through measurement.

Optionally, after receiving the first reference signal, the network device may measure the interference strength based on the first reference signal, calculate the CQI, and determine the scheduling information.

Specifically, the scheduling information includes an RB location and quantity occupied by the BWP, and an MCS order used (including a modulation order, a code rate, and a combined spectral efficiency).

For example, the scheduling information may indicate that the number of RBs occupied by the BWP is 0 to 15, the MCS order is 20, the corresponding modulation order is 256QAM, the code rate is 0.67, and the comprehensive spectral efficiency is 5.332.

Specifically, the CQI may be determined based on the measurement result of the first reference signal, and the scheduling information may be further determined. For example, the SINR is 5 dB obtained by measuring the first reference signal, and the CQI is calculated to be 5, so that the MCS order is 9, the corresponding modulation order is 16QAM, the code rate is 0.6, and the comprehensive spectral efficiency is 2.4063 may be obtained. Based on the measurement result, the MCS order for scheduling the BWP may be determined to be 9, and then the number of RBs may be calculated to be 24 based on parameters such as the target throughput, the SINR value, and the power headroom.

The power of the transmit signal may be obtained through the following three or more methods:
Method 1: The power value of the transmit signal is obtained by averaging the signal power of all REs occupied by the PUSCH on the BWP before the switching;
Manner 2: The power value of the to-be-transmitted signal is obtained by averaging signal power of all REs occupied by the PUSCH-DMRS on the BWP before the switching.
Manner 3: The power value of the to-be-transmitted signal is a power value of an RE of a PUSCH-DMRS on the BWP before the switching.

Optionally, this embodiment may further include the following steps S403 to S405:
S403: The network device sends second indication information, and the terminal device receives the second indication information, where the second indication information indicates the first BWP.

Specifically, the network device may send the second indication information to the terminal device to indicate the first BWP, so that the terminal device switches the working BWP to the first BWP.

Specifically, the second indication information may be sent by using signaling or a signal such as RRC signaling, DCI, or a MAC CE.

S404: The network device sends third indication information, and the terminal device receives the third indication information, where the third indication information indicates the scheduling information corresponding to the first BWP.

Specifically, the network device may send the third indication information to the terminal device to indicate the scheduling information corresponding to the first BWP, so that the terminal device switches the working BWP to the first BWP.

Specifically, the third indication information may be sent by using signaling or a signal such as RRC signaling, DCI, or a MAC CE.

Optionally, the second indication information and the third indication information may be carried in a same piece of signaling or a same message for sending. In other words, the second indication information or the third indication information may indicate the first BWP and the scheduling information corresponding to the first BWP.

Specifically, the scheduling information includes an RB location and quantity occupied by the BWP, and an MCS order used (including a modulation order, a code rate, and a combined spectral efficiency). For example, the scheduling information may be used to indicate that an RB number occupied by the BWP is 0 to 15, an MCS order is 20, a corresponding modulation order is 256QAM, a code rate is 0.67, and a combined spectral efficiency is 5.332.

S405: The terminal device sends an uplink signal to the network device in the first BWP, and the network device receives the uplink signal in the first BWP.

Specifically, after receiving the second indication information and/or the third indication information sent by the network device, the terminal device may send an uplink signal to the network device in the first BWP, that is, the terminal device may send an uplink signal to the network device in the switched working BWP.

Specifically, the uplink signal may include an uplink shared physical channel PUSCH, an uplink control physical channel PUCCH, a sounding reference signal SRS, or another type of uplink signal such as a channel/signal/ or reference signal that is not defined in the current protocol. The uplink signal may also be referred to as uplink data, uplink control information, or an uplink reference signal.

Optionally, before step S401, this embodiment may further include the following step: The terminal device sends an uplink signal in the second BWP. That is, the terminal device sends an uplink signal in the second BWP before switching the BWP.

According to the solution in this embodiment of this application, the reference signal is sent on the switched BWP, and an accurate transmit power of the reference signal is determined based on a difference between a bandwidth of the switched BWP and a bandwidth of the BWP before switching. For a problem that an inaccurate frequency domain position and power of the reference signal when a signal bandwidth is switched cause an inaccurate uplink CQI measurement, in this method, a reference signal is transmitted on a currently scheduled BWP, and a transmit power of the reference signal is adjusted based on a configuration of the switched BWP and a configuration of the current BWP, thereby improving accuracy of CQI measurement and improving an uplink throughput rate.

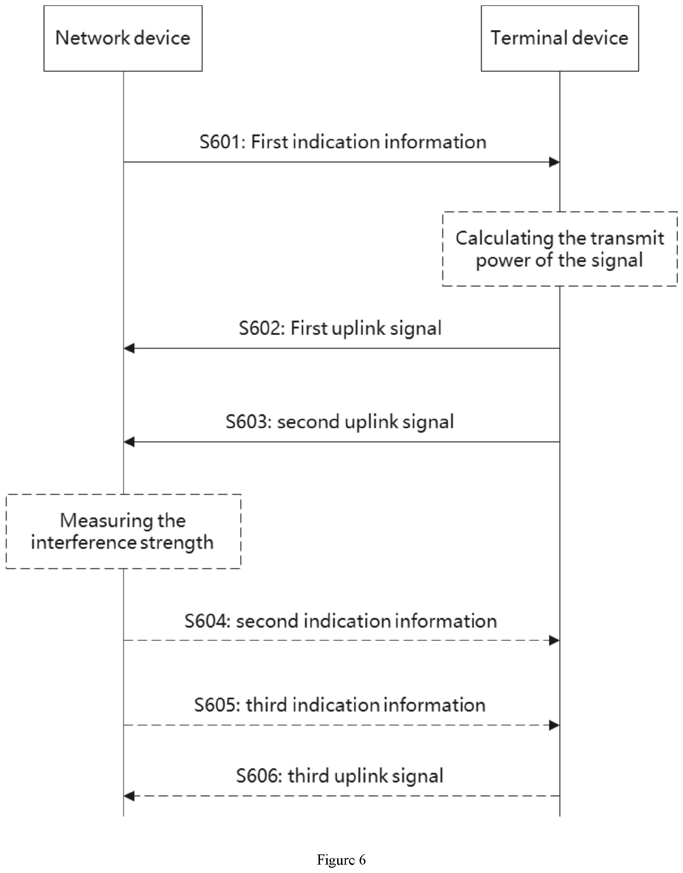

The following describes another embodiment of the present invention with reference to FIG. 6.

FIG. 6 is another signal transmission method according to the present invention, and the method includes the following steps:
S601: A network device sends first indication information to a terminal device, and the terminal device obtains the first indication information, where the first indication information is used to indicate a frequency domain resource occupied by at least one first uplink signal.

Specifically, the first uplink signal may be an SRS/CQI-RS, a DMRS+PUSCH, a front-load+additional DMRS+PUSCH, a PUCCH format 0/MsgA (PUSCH without DMRS), a PUCCH format 1, a PUCCH format 2, or a PUCCH format 3.

Specifically, the first uplink signal may be used to measure an interference signal, for example, to measure an interference strength of a neighboring cell signal. Then, the calculation result may be used to calculate a signal to interference plus noise ratio SINR, to obtain an uplink channel quality indicator CQI. For example, if the SINR=-10 dB is obtained through measurement of a reference signal, the corresponding CQI=3 may be calculated.

In some embodiments, the first indication information may be sent by using signaling or a signal such as RRC signaling, DCI, or a MAC CE.

S602: The terminal device sends at least one first uplink signal in the first BWP, and the network device receives the at least one first uplink signal.

S603: The terminal device sends at least one second uplink signal in the second BWP, and the network device receives the at least one second uplink signal.

Optionally, the terminal device may calculate the transmit power of the signal after receiving the first indication information. The signal may be the first uplink signal.

Optionally, the terminal device receives configuration information, where the configuration information includes the quantity of subcarriers and/or the subcarrier spacing of the first BWP.

Specifically, the BWP may also be referred to as a signal bandwidth, or the BWP may be another signal bandwidth defined.

Specifically, the system parameters refer to a subcarrier spacing and a CP length. For example, the configuration information may indicate that a subcarrier spacing of the first BWP is 60 kHz and an extended CP (Extended CP) is used, or indicate that a subcarrier spacing of the first BWP is 30 kHz and a normal CP (Normal CP) is used.

Optionally, the configuration information may be used to configure a signal bandwidth candidate set for the terminal device. Using an example in which the signal bandwidth is a BWP, the network device may configure a BWP candidate set for the terminal device in advance by using the configuration information. The BWP candidate set may include a plurality of BWPs available to the terminal device, and a quantity of resource blocks (RBs) and/or a subcarrier spacing corresponding to the plurality of BWPs.

Optionally, the configuration information may be carried in the first indication information, or the configuration information and the first indication information may be carried in the same signaling.

For example, the BWP candidate set may include a BWP1 and a BWP2, where an RB number included in the BWP1 is 0-23, and an RB number included in the BWP2 is 16-31; or an RB number included in the BWP1 is 0-31 and 64-127, and an RB number included in the BWP2 is 30-63 and 126-255.

Specifically, a start time of a time domain symbol for sending the at least one first uplink signal is not later than a start time of a time domain symbol for sending the at least one second uplink signal. It may be understood that the first uplink signal is sent earlier than the second uplink signal in the time dimension.

Specifically, the frequency domain resource of the first BWP is different from the frequency domain resource of the second BWP.

In some embodiments, the number of subcarriers and/or the subcarrier spacing of the first BWP and the second BWP may be included in the number of subcarriers and/or the subcarrier spacing of one or more BWPs indicated by the configuration information. For example, the configuration information may indicate that the first BWP includes 32 RBs, the subcarrier spacing is 60 kHz, and an extended CP is used, while also indicating that the second BWP includes 64 RBs, and the subcarrier spacing and CP are the same as those of the first BWP. For another example, the configuration information may indicate that the first BWP includes 32 RBs, the subcarrier spacing is 60 kHz, and an extended CP is used, while also indicating that the second BWP includes 64 RBs, the subcarrier spacing is 30 kHz, and a normal CP is used.

Specifically, that the first BWP is different from the second BWP may be understood as that the first BWP and the second BWP do not overlap or partially overlap, or frequency domain units (REs) corresponding to the first BWP are different from or partially the same as frequency domain units corresponding to the second BWP.

For example, if an RB number included in the BWP1 is 0 to 23, and an RB number included in the BWP2 is 16 to 31, the BWP1 is different from the BWP2.

For another example, if an RB number included in the BWP1 is 0 to 31 and 64 to 127, and an RB number included in the BWP2 is 30 to 63 and 126 to 255, the BWP1 is different from the BWP2.

For another example, if an RB number included in the BWP1 is 0 to 12, and an RB number included in the BWP2 is 0 to 11, the BWP1 is different from the BWP2.

For another example, if an RE number included in the BWP1 is 0 to 255, and an RE number included in the BWP2 is 0 to 254, the BWP1 is different from the BWP2.

Specifically, the second BWP may be a BWP currently used by the terminal device.

Specifically, the second uplink signal may be an SRS/CQI-RS, a DMRS+PUSCH, a front-load+additional DMRS+PUSCH, a PUCCH format 0/MsgA (PUSCH without a DMRS), a PUCCH format 1, a PUCCH format 2, or a PUCCH format 3. Alternatively, the second uplink signal may be a signal such as uplink data.

Specifically, the transmit power of the first uplink signal is associated with the quantities of subcarriers and/or the subcarrier spacings included in the first BWP and the second BWP. For example, after obtaining the quantities of subcarriers and/or the subcarrier spacings included in the one or more BWPs, the terminal device may calculate the transmit power of the first uplink signal based on the quantities of subcarriers and/or the subcarrier spacings of the first BWP and the quantities of subcarriers and/or the subcarrier spacings of the second BWP.

In some embodiments, the first uplink signal may be the first reference signal.

The following uses an example in which the first uplink signal is the first reference signal to describe how to calculate the transmit power of the first reference signal.

The transmit power of the first reference signal is P1, the transmit power of the second reference signal is P2, the difference between the transmit power of the first reference signal and the transmit power of the second reference signal is ΔP, ΔP=P1-P2, the first reference signal is a reference signal sent on the first BWP, and the second reference signal is a reference signal sent on the second BWP.

Specifically, the difference between the transmit power of the first reference signal and the transmit power of the second reference signal ΔP satisfies the following formula: $ΔP = 10 log 10 \left(\frac{Δ {f}_{1}}{Δ {f}_{2}}\frac{{N}_{RB}^{{BWP}_{1}}}{{N}_{RB}^{{BWP}_{2}}}\right) dB$

The subcarrier spacing of the first BWP is Δ*f*₁, and the subcarrier spacing of the second BWP is Δ*f*₂*.* The number of RBs in the first BWP is ${N}_{RB}^{{BWP}_{1}}$, and the number of RBs in the second BWP is ${N}_{RB}^{{BWP}_{2}}$.

Specifically, if the number of RBs in the first BWP is ${N}_{RB}^{{BWP}_{1}}$, the number of RBs in the second BWP is ${N}_{RB}^{{BWP}_{2}}$, the subcarrier spacing of the first BWP is 2^{*µ*₁}*f*₀, and the subcarrier spacing of the second BWP is 2^{*µ*₂}*f*₀, where *f*₀ is a subcarrier spacing unit pre-specified in a protocol, the foregoing formula may also be expressed in the following way: $ΔP = 10 log 10 \left({2}^{{μ}_{1} - {μ}_{2}}\frac{{N}_{RB}^{{BWP}_{1}}}{{N}_{RB}^{{BWP}_{2}}}\right) dB$ $ΔP = 10 log 10 \left(Δ{f}_{1}{N}_{RB}^{{BWP}_{1}}\right) - 10 log 10 \left(Δ{f}_{2}{N}_{RB}^{{BWP}_{2}}\right) dB$ $ΔP = 10 log 10 \left(Δ{f}_{1}\right) + 10 log 10 \left({N}_{RB}^{{BWP}_{1}}\right) - 10 log 10 \left(Δ{f}_{2}\right) - 10 log 10 \left({N}_{RB}^{{BWP}_{2}}\right) dB$ $ΔP = 10 log 10 \left({2}^{{μ}_{1}}{N}_{RB}^{{BWP}_{1}}\right) - 10 log 10 \left({2}^{{μ}_{2}}{N}_{RB}^{{BWP}_{2}}\right) dB$ $ΔP = 10 log 10 \left({2}^{{μ}_{1}}{f}_{0}{N}_{RB}^{{BWP}_{1}}\right) - 10 log 10 \left({2}^{{μ}_{2}}{f}_{0}{N}_{RB}^{{BWP}_{2}}\right) dB$ $ΔP = 10 log 10 \left({2}^{{μ}_{1}}\right) + 10 log 10 \left({N}_{RB}^{{BWP}_{1}}\right) - 10 log 10 \left({2}^{{μ}_{2}}\right) - 10 log 10 \left({N}_{RB}^{{BWP}_{2}}\right) dB$

Alternatively, ΔP_dBΔP may be obtained through calculation in the foregoing manner. The dB value of ΔP indicates that the actual value of ΔP_dBΔP is ΔP = 10^{(ΔPdB/10)}.

Specifically, the foregoing formula may also be written in the following form: $ΔP = 10 log 10 \left(\frac{Δ {f}_{1}}{Δ {f}_{2}}\frac{{N}_{RE}^{{BWP}_{1}}}{{N}_{RE}^{{BWP}_{2}}}\right) dB$ a subcarrier spacing of the first BWP is Δ*f*₁*,* and a subcarrier spacing of the second BWP is Δ*f*₂*.* The number of REs in the first BWP is ${N}_{RE}^{{BWP}_{1}}$, and the number of REs in the second BWP is ${N}_{RE}^{{BWP}_{2}}$.

Specifically, if the quantity of REs in the first BWP is ${N}_{RE}^{{BWP}_{1}}$, the quantity of REs in the second BWP is ${N}_{RE}^{{BWP}_{2}}$, the subcarrier spacing of the first BWP is *2*^{*µ*₁}*f*₀*,* the subcarrier spacing of the second BWP is 2^{*µ*₂}*f*₀, and *f*₀ is a subcarrier spacing unit pre-specified in a protocol, the foregoing formula may alternatively be written as: $ΔP = 10 log 10 \left({2}^{{μ}_{1} - {μ}_{2}}\frac{{N}_{RE}^{{BWP}_{1}}}{{N}_{RE}^{{BWP}_{2}}}\right) dB$ $ΔP = 10 log 10 \left(Δ{f}_{1}{N}_{RE}^{{BWP}_{1}}\right) - 10 log 10 \left(Δ{f}_{2}{N}_{RE}^{{BWP}_{2}}\right) dB$ $ΔP = 10 log 10 \left(Δ{f}_{1}\right) + 10 log 10 \left({N}_{RE}^{{BWP}_{1}}\right) - 10 log 10 \left(Δ{f}_{2}\right) - 10 log 10 \left({N}_{RE}^{{BWP}_{2}}\right) dB$ $ΔP = 10 log 10 \left({2}^{{μ}_{1}}{N}_{RE}^{{BWP}_{1}}\right) - 10 log 10 \left({2}^{{μ}_{2}}{N}_{RE}^{{BWP}_{2}}\right) dB$ $ΔP = 10 log 10 \left({2}^{{μ}_{1}}{f}_{0}{N}_{RE}^{{BWP}_{1}}\right) - 10 log 10 \left({2}^{{μ}_{2}}{f}_{0}{N}_{RE}^{{BWP}_{2}}\right) dB$ $ΔP = 10 log 10 \left({2}^{{μ}_{1}}\right) + 10 log 10 \left({N}_{RE}^{{BWP}_{1}}\right) - 10 log 10 \left({2}^{{μ}_{2}}\right) - 10 log 10 \left({N}_{RE}^{{BWP}_{2}}\right) dB$

Alternatively, ΔP_dBΔP may be obtained through calculation in the foregoing manner. The dB value of ΔP indicates that the actual value of ΔP_dBΔP is ΔP = 10^{(ΔPdB/10)}.

The transmit power of the first reference signal may be calculated according to the foregoing formula, so that the first reference signal is sent on the first BWP.

Optionally, after receiving the first reference signal, the network device may measure the interference strength based on the first reference signal, calculate the CQI, and determine the scheduling information.

Specifically, the scheduling information includes an RB location and quantity occupied by the BWP, and an MCS order (including a modulation order, a code rate, and a combined spectral efficiency) used.

For example, the scheduling information may be used to indicate that an RB number occupied by the BWP is 0 to 15, an MCS order is 20, a corresponding modulation order is 256QAM, a code rate is 0.67, and a combined spectral efficiency is 5.332.

Specifically, the CQI may be determined based on the measurement result of the first reference signal, and the scheduling information is further determined. For example, the SINR is 5 dB obtained by measuring the first reference signal, and the CQI is calculated to be 5, so that an MCS order is 9, a corresponding modulation order is 16QAM, a code rate is 0.6, and a combined spectral efficiency is 2.4063 may be obtained. Based on the measurement result, an MCS order 9 may be determined when the BWP is scheduled, and then a quantity of RBs is calculated to be 24 based on parameters such as a target throughput, a SINR value, and a power headroom.

The transmit signal power may be obtained through the following three or more methods:
Method 1: The power value of the transmit signal is obtained by averaging the signal power of all REs occupied by the PUSCH on the BWP before the switching.
Method 2: The power value of the transmit signal is obtained by averaging the signal power of all REs occupied by the PUSCH-DMRS on the BWP before the switching.
Method 3: The power value of the transmit signal is the power of an RE occupied by a PUSCH-DMRS on the BWP before the switching.

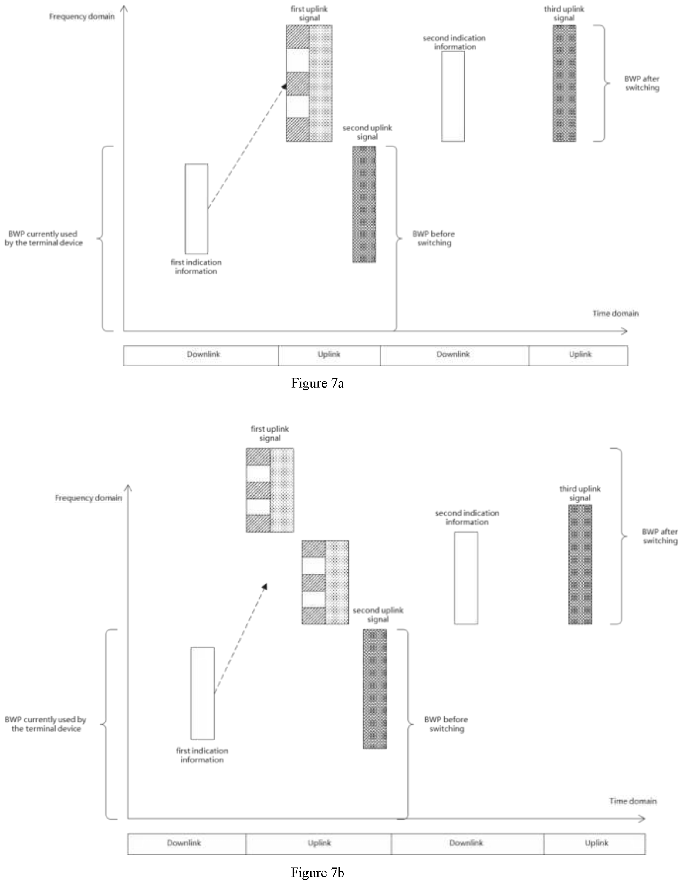

As shown in FIG. 7a, after receiving the first indication information, the terminal device may send a first uplink signal to the network device, where a frequency domain resource of the first uplink signal is located within the first BWP. Subsequently, the terminal device sends a second uplink signal to the network device, where a frequency domain resource of the second uplink signal is located within the second BWP. The frequency domain resource of the first BWP is different from the frequency domain resource of the second BWP. The first BWP is a BWP after the BWP switching, and the second BWP is a BWP before the BWP switching. As shown in FIG. 7b, the first uplink signal may be sent in a frequency hopping sending manner.

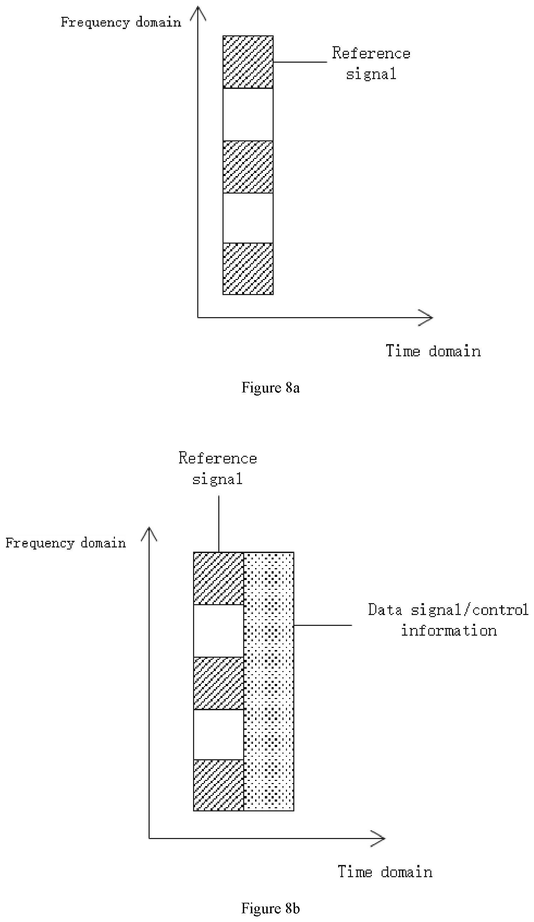

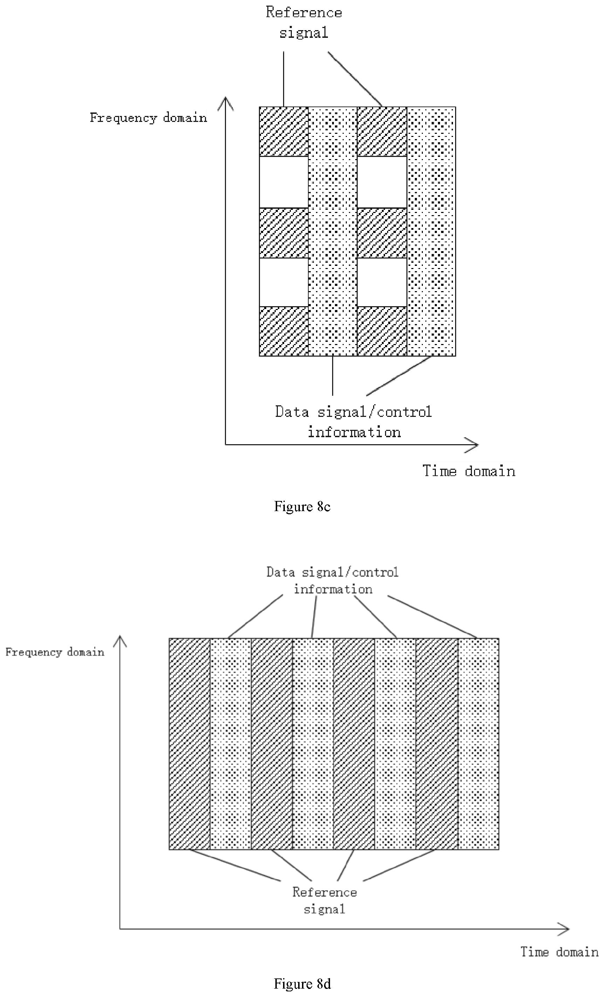

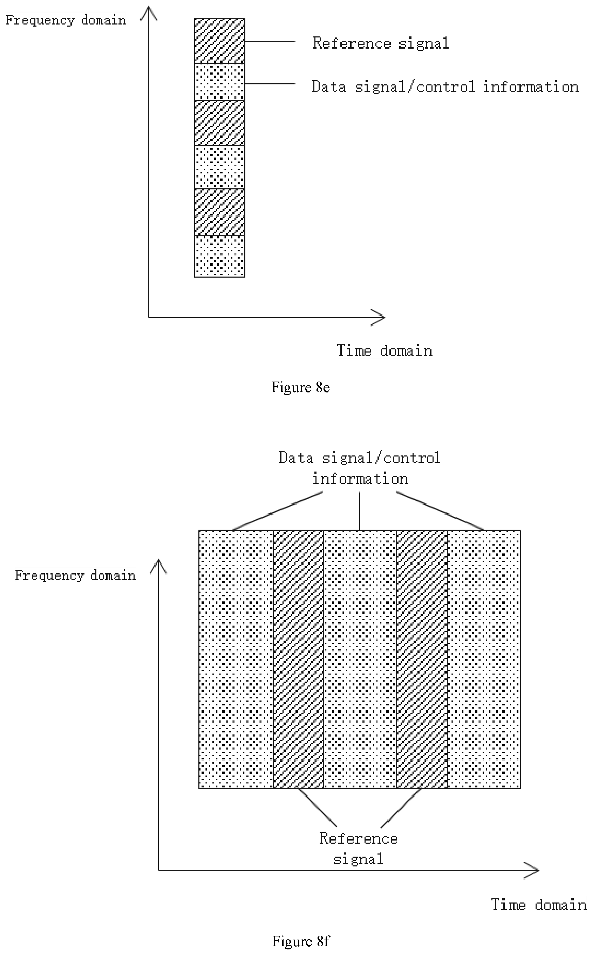

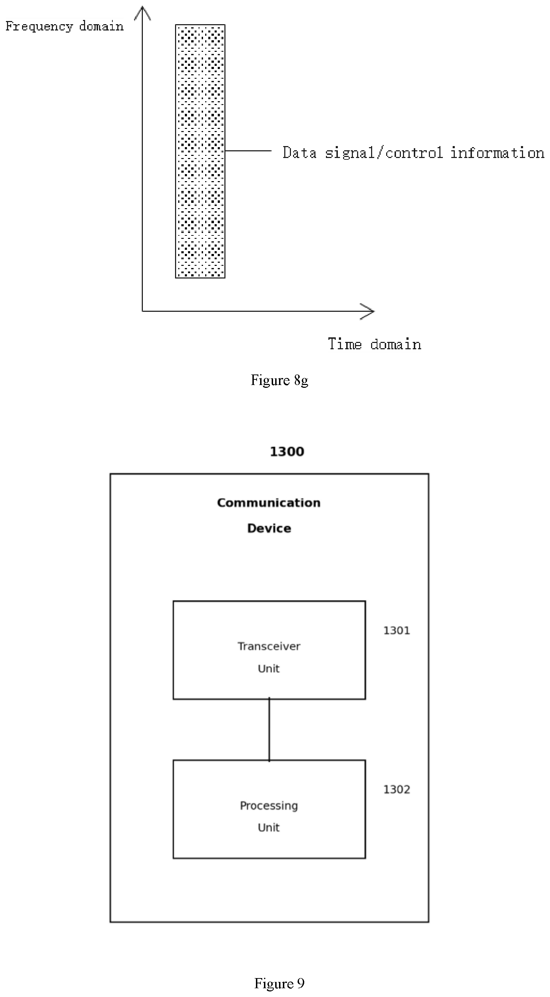

FIG. 8a to FIG. 8g show different distributions of time-frequency resources of first uplink signals, where a horizontal direction is a time domain direction, and a vertical direction is a frequency domain direction. There may be the following several cases for the time-frequency resource and distribution of the first uplink signal:
(1) Reference signal. For example, a time-frequency resource distribution of a reference signal in FIG. 8a. The reference signal may be a signal such as a DMRS, an SRS, or a channel quality measurement signal CQI-RS;
(2) Reference signal + data signal/control signal. For example, a time-frequency resource distribution of a reference signal + data signal/control signal in FIG. 8b, FIG. 8c, FIG. 8d, FIG. 8e, and FIG. 8f. The reference signal may be a signal such as an SRS, a channel quality measurement signal CQI-RS, or a DMRS signal, where the DMRS signal may be an additional DMRS signal or a front-load DMRS signal. The data signal/control signal may be a PUSCH signal or a PUCCH signal, where the PUCCH signal may be a PUCCH format 1 signal, a PUCCH format 2 signal, a PUCCH format 3 signal, or the like.
(3) Data signal/control signal. For example, a time-frequency resource distribution of the data signal/control signal in FIG. 8g may be considered. The data signal/control signal may be a PUSCH signal or a PUCCH signal. The PUCCH signal may be a PUCCH format 0 signal, and the PUSCH signal may be a signal such as an MsgA.

Optionally, this embodiment may further include the following steps S604 to S606:
S604: The network device sends second indication information, and the terminal device receives the second indication information, where the second indication information indicates a frequency domain resource occupied by the first BWP.

Specifically, the network device may send second indication information to the terminal device to indicate the frequency domain resource occupied by the first BWP, so that the terminal device switches the working BWP to the first BWP.

Specifically, the second indication information may be sent by using signaling or a signal such as RRC signaling, DCI, or a MAC CE.

S605: The network device sends third indication information, and the terminal device receives the third indication information, where the third indication information indicates scheduling information of the third uplink signal.

Specifically, the network device may send the third indication information to the terminal device to indicate the scheduling information corresponding to the first BWP, so that the terminal device switches the working BWP to the first BWP.

Specifically, the third indication information may be sent by using signaling or a signal such as RRC signaling, DCI, or a MAC CE.

Optionally, the second indication information and the third indication information may be carried in a same piece of signaling or message for sending. In other words, the second indication information or the third indication information may indicate the first BWP and the scheduling information corresponding to the first BWP.

Specifically, the scheduling information includes an RB location and quantity occupied by the BWP, and an MCS order used (including a modulation order, a code rate, and a combined spectral efficiency). For example, the scheduling information may be used to indicate that an RB number occupied by the BWP is 0 to 15, an MCS order is 20, a corresponding modulation order is 256QAM, a code rate is 0.67, and a combined spectral efficiency is 5.332.

S606: The terminal device sends a third uplink signal to the network device on the first BWP, and the network device receives the third uplink signal on the first BWP.

Specifically, after receiving the second indication information and/or the third indication information sent by the network device, the terminal device may send the third uplink signal to the network device on the first BWP, that is, the terminal device may send the third uplink signal to the network device on the switched working BWP.

Specifically, the third uplink signal may include an uplink shared physical channel PUSCH, an uplink control physical channel PUCCH, a sounding reference signal SRS, an uplink signal such as a channel/signal/reference signal of another type that is not defined in the current protocol, or the like. The third uplink signal may also be referred to as uplink data, uplink control information, or an uplink reference signal.

As shown in FIG. 7a and FIG. 7b, after receiving the second indication information, the terminal device may send the third uplink signal on the first BWP (that is, the switched BWP).

According to the solution in the embodiments of this application, the first uplink signal is sent on a BWP different from the BWP before the switching, so that the network device can more accurately estimate uplink channel quality by measuring the first uplink signal, thereby determining more accurate uplink scheduling information (for example, an MCS level), and improving an uplink throughput rate.

It may be understood that, in the foregoing embodiments, the methods and/or steps implemented by the network device may alternatively be implemented by a component (for example, a chip or a circuit) that can be used in the network device. The methods and/or steps implemented by the terminal device may alternatively be implemented by a component (for example, a chip or a circuit) that can be used in the terminal device. The methods and/or steps implemented by the core network device may alternatively be implemented by a component (for example, a chip or a circuit) that can be used in the core network device.

The foregoing mainly describes the solutions provided in embodiments of this application from the perspective of interaction between devices. Correspondingly, an embodiment of this application further provides a communications apparatus, where the communications apparatus is configured to implement the foregoing methods. The communications apparatus may be the network device in the foregoing method embodiments, or an apparatus that includes the network device, or a component that can be used in the network device. Alternatively, the communications apparatus may be the terminal device in the foregoing method embodiments, or an apparatus that includes the terminal device, or a component that can be used in the terminal device. Alternatively, the communications apparatus may be the core network device in the foregoing method embodiments, or an apparatus that includes the core network device, or a component that can be used in the core network device. It may be understood that, to implement the foregoing functions, the communications apparatus includes a corresponding hardware structure and/or software module for performing each function. A person skilled in the art should easily be aware that, in combination with units and algorithm steps of the examples described with reference to embodiments disclosed in this specification, this application can be implemented by hardware or a combination of hardware and computer software. Whether a function is performed by hardware or hardware driven by computer software depends on particular applications and design constraints of the technical solutions. A person skilled in the art can achieve the described functions by using different methods for each particular application, but it should not be considered as beyond the scope of this application.

In the embodiments of this application, the communication apparatus may be divided into function modules according to the method embodiments. For example, each function module may be obtained through division based on each corresponding function, or two or more functions may be integrated into one processing module. The integrated module may be implemented in a form of hardware, or may be implemented in a form of a software function module. It should be noted that the module division in the embodiments of this application is an example, and is merely logical function division, and may be other division in actual implementation.

It may be understood that, to implement the functions in the foregoing embodiments, the terminal and the network device include corresponding hardware structures and/or software modules for performing the functions. A person skilled in the art should easily be aware that, in combination with units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

FIG. 9 to FIG. 12 are schematic structural diagrams of possible communication apparatuses according to an embodiment of this application. These communication apparatuses may be configured to implement functions of the terminal or the network device in the foregoing method embodiments, and therefore can also achieve beneficial effects of the foregoing method embodiments.

As shown in FIG. 9, it is a schematic structural diagram of a communication apparatus according to an embodiment of this application. The communication apparatus 1300 includes a transceiver unit 1301 and a processing unit 1302.

When the communication apparatus 1300 is configured to implement the functions of the terminal device in the method embodiment shown in FIG. 4, the transceiver unit 1301 is configured to perform an operation of the terminal device in the embodiment shown in FIG. 4.

When the communication apparatus 1300 is configured to implement the functions of the terminal device in the method embodiment shown in FIG. 6, the transceiver unit 1301 is configured to perform an operation of the terminal device in the embodiment shown in FIG. 6.

When the communication apparatus 1300 is configured to implement the functions of the network device in the method embodiment shown in FIG. 4, the transceiver unit 1301 is configured to perform an operation of the network device in the embodiment shown in FIG. 4.

When the communication apparatus 1300 is configured to implement the functions of the network device in the method embodiment shown in Figure 6, the transceiver unit 1301 is configured to perform the operations of the network device in the embodiment illustrated in Figure 6.

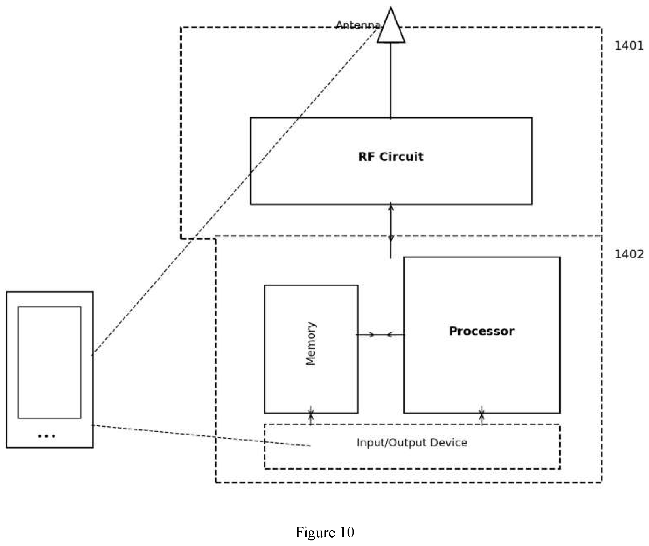

FIG. 10 shows a simplified schematic structural diagram of a terminal device. For ease of understanding and convenience of illustration, in FIG. 10, a mobile phone is used as an example of the terminal. As shown in FIG. 10, the terminal device includes a processor, a memory, a radio frequency circuit, an antenna, and an input/output apparatus. The processor is mainly configured to process communication protocols and communication data, control the terminal, execute software programs, process data of the software programs, and the like. The memory is mainly configured to store software programs and data. The radio frequency circuit is mainly configured to perform conversion between a baseband signal and a radio frequency signal, and process the radio frequency signal. The antenna is mainly configured to receive and transmit radio frequency signals in the form of electromagnetic waves. The input/output apparatus, such as a touchscreen, display, or keyboard, is mainly configured to receive data input by a user and output data to the user. For example, some types of terminal devices may not have an input/output apparatus.

When sending data, the processor performs baseband processing on the data to be sent, and then outputs a baseband signal to the radio frequency circuit. The radio frequency circuit performs radio frequency processing on the baseband signal and then sends the radio frequency signal outward in the form of electromagnetic waves through the antenna. When data is received at the terminal, the radio frequency circuit receives the radio frequency signal through the antenna, converts the radio frequency signal into a baseband signal, and outputs the baseband signal to the processor. The processor then converts the baseband signal into data and processes the data. For ease of illustration, FIG. 10 shows only one memory and one processor. In an actual terminal device product, there may be one or more processors and one or more memories. The memory may also be referred to as a storage medium, a storage device, or the like. The memory may be disposed independently of the processor, or may be integrated with the processor. This is not limited in this embodiment of this application.

In the embodiments of this application, an antenna and a radio frequency circuit that have a transceiver function may be considered as a receiving unit and a transmitting unit (which may also be collectively referred to as a transceiver unit) of a terminal device, and a processor that has a processing function may be considered as a processing unit of the terminal. As shown in FIG. 10, the terminal includes a transceiver unit 1401 and a processing unit 1402. The transceiver unit 1401 may also be referred to as a receiver/transmitter (transmitting), a receiver/transmitter machine, a receiver/transmitter circuit, or the like. The processing unit 1402 may also be referred to as a processor, a processing board, a processing module, a processing apparatus, or the like. The transceiver unit 1401 is configured to implement the functions of the transceiver unit 1301 in the embodiment shown in FIG. 9; and the processing unit 1402 is configured to implement the functions of the processing unit 1302 in the embodiment shown in FIG. 9.

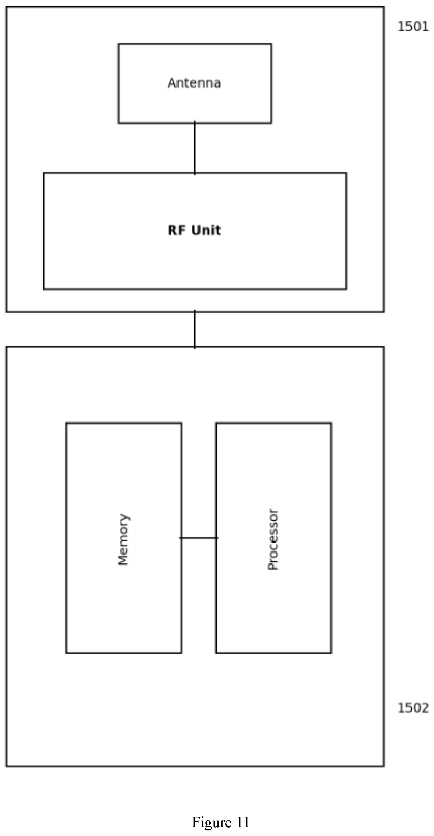

FIG. 11 illustrates a schematic structural diagram of a simplified network device. The network device includes an RF signal transceiver and conversion section and a 1502 section. The RF signal transceiver and conversion section further includes a transceiver unit 1501 section. The RF signal transceiver and conversion section is mainly used for receiving and transmitting RF signals, and for converting between RF signals and baseband signals. The 1502 section is mainly used for baseband processing and controlling the network device, among other functions. The transceiver unit 1501 may also be referred to as a receiver/transmitter (transmitting), a receiver/transmitter machine, a receiver/transmitter circuit, or the like. The 1502 section is typically the control center of the network device, often referred to as a processing unit, and is used to control the network device to perform the steps executed by the network device as described in FIG. 4 or FIG. 6. For specific details, refer to the descriptions in the relevant sections above. The transceiver unit 1501 may be configured to implement the functions of the transceiver unit 1301 in the embodiment shown in FIG. 9, while the 1502 section is configured to implement the functions of the processing unit 1302 in the embodiment shown in FIG. 9.

The 1502 may include one or more boards, where each board may include one or more processors and one or more memories. The processor is configured to read and execute programs in the memory to implement baseband processing functions and control of the network device. If there are multiple boards, these boards may be interconnected to enhance processing capabilities. As an optional implementation, it is also possible for multiple boards to share one or more processors, or for multiple boards to share one or more memories, or for multiple boards to simultaneously share one or more processors.

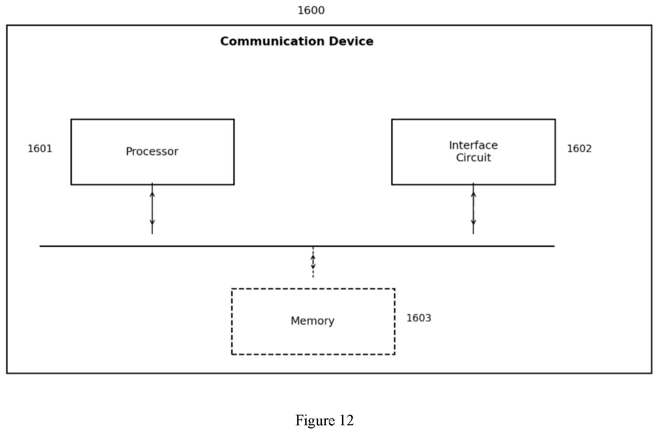

As shown in Figure 12, it is a schematic structural diagram of another communication apparatus according to an embodiment of this application. The communication apparatus 1600 includes a processor 1601 and an interface circuit 1602. The processor 1601 and the interface circuit 1602 are coupled to each other. It may be understood that the interface circuit 1602 may be a transceiver or an input/output interface. Optionally, the communication apparatus 1600 may further include a memory 1603, configured to store instructions executed by the processor 1601, or store input data on which the processor 1601 executes instructions, or store data generated after the processor 1601 executes instructions.

When the communication apparatus 1600 is configured to implement the method shown in FIG. 4 or FIG. 6, the processor 1601 is configured to implement a function of the processing unit 1302, and the interface circuit 1602 is configured to implement a function of the transceiver unit 1301.

When the communication apparatus is a chip applied to a terminal device, the chip is configured to implement a function of the terminal device in the foregoing method embodiments. The chip receives information from another module (such as a radio frequency module or an antenna) in the terminal device, where the information is sent by a network device or another device to the terminal device; or the chip sends information to another module (such as a radio frequency module or an antenna) in the terminal device, where the information is sent by the terminal device to the network device or another device.

When the communication apparatus is a chip applied to a network device, the chip is configured to implement a function of the network device in the foregoing method embodiments. The chip receives information from another module (such as a radio frequency module or an antenna) in the network device, where the information is sent by a terminal or another device to the network device; or the chip sends information to another module (such as a radio frequency module or an antenna) in the network device, where the information is sent by the network device to the terminal device or another device.

It is understandable that the processor in the embodiments of this application may be a central processing unit (CPU), or may be another general-purpose processor, a digital signal processor (DSP), an application-specific integrated circuit (ASIC), a field programmable gate array (FPGA) or another programmable logic device, a transistor logic device, a hardware component, or any combination thereof. The general-purpose processor may be a microprocessor, or may be any conventional processor.

The method steps in the embodiments of this application may be implemented through hardware, or may be implemented by a processor executing software instructions. The software instructions may include corresponding software modules, which may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (CD-ROM), or any other form of storage medium well-known in the art. An example of a storage medium is coupled to a processor, enabling the processor to read information from the storage medium and write information into the storage medium. Of course, the storage medium may also be a component of the processor. The processor and the storage medium may be located in an ASIC. In addition, the ASIC may be located in the first node. Certainly, the processor and the storage medium may also exist in the terminal device as discrete components.

An embodiment of this application further provides a communications system, including the foregoing communications apparatus.

An embodiment of this application further provides a computer-readable storage medium, on which a computer program or instructions are stored. When the program or the instructions are executed by a processor, the method described in the foregoing embodiments is performed.

An embodiment of this application further provides a computer program product. When the computer program product is executed on a computing device, the method described in the foregoing embodiments is performed.

The foregoing embodiments may be implemented entirely or partially by software, hardware, firmware, or any combination thereof. When software is used to implement the embodiments, the embodiments may be implemented entirely or partially in a form of a computer program product. The computer program product includes one or more computer programs or instructions. When the computer program or the instructions are loaded and executed on a computer, the procedures or functions according to the embodiments of this application are performed entirely or partially. The computer may be a general-purpose computer, a dedicated computer, a computer network, a network device, a terminal, or another programmable apparatus. The computer program or the instructions may be stored in a computer-readable storage medium, or may be transmitted from one computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, such as a server or a data center, integrating one or more usable media. The usable medium may be a magnetic medium, for example, a floppy disk, a hard disk drive, or a magnetic tape; an optical medium, for example, a digital video disc; or a semiconductor medium, for example, a solid state disk.

In embodiments of this application, unless otherwise specified or there is a logical conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, or only B exists, where A and B may be singular or plural. In the text description of this application, the character "/" generally indicates an "or" relationship between associated objects. In the formulas in this application, the character "/" indicates an "a division" relationship between associated objects.

It may be understood that the various numbers used for identification in embodiments of this application are merely for differentiation for ease of description, and are not intended to limit the scope of embodiments of this application. The sequence numbers of the foregoing processes do not mean execution sequences, and the execution sequences of the processes should be determined based on functions and internal logic of the processes.

## Claims

1. A signal transmission method, comprising:
obtaining first indication information, wherein the first indication information indicates a frequency domain resource occupied by at least one first uplink signal;
transmitting at least one first uplink signal in a first BWP;
transmitting at least one second uplink signal in a second BWP;
The time domain symbol start time at which the at least one first uplink signal is sent is not later than the time domain symbol start time at which the at least one second uplink signal is sent, wherein the frequency domain resource of the first BWP is different from the frequency domain resource of the second BWP.

2. The method according to claim 1, wherein the transmit power of the first uplink signal is determined based on the number of subcarriers and/or the subcarrier spacing included in the first BWP and the second BWP.

3. The method according to claim 2, wherein the method further comprises:
receiving configuration information, wherein the configuration information comprises the number of subcarriers and/or the subcarrier spacing of the first BWP.

4. The method according to any one of claims 1 to 3, wherein the method further comprises:
Receiving second indication information, where the second indication information indicates the frequency domain resource occupied by the first BWP.

5. The method according to any one of claims 1 to 4, wherein the method further comprises:
Receiving third indication information, wherein the third indication information indicates scheduling information of a third uplink signal.

6. The method according to claim 5, wherein the method further comprises:
Sending the third uplink signal within the first BWP based on the scheduling information.

7. The method according to claim 6, wherein a start time of a time domain symbol for sending the third uplink signal is not earlier than a start time of a time domain symbol for sending the second uplink signal.

8. The method according to any one of claims 1 to 7, wherein
a transmit power of the first uplink signal is P1, a transmit power of the second uplink signal is P2, and a difference between the transmit power of the first uplink signal and the transmit power of the second uplink signal is ΔP, and ΔP=P1-P2.

9. The method according to claim 8, wherein the difference ΔP between the transmit power of the first uplink signal and the transmit power of the second uplink signal ΔP satisfies the formula: $ΔP = 10 log 10 \left(\frac{Δ {f}_{1}}{Δ {f}_{2}}\frac{{N}_{RE}^{{BWP}_{1}}}{{N}_{RE}^{{BWP}_{2}}}\right) dB$ The subcarrier spacing of the first BWP is Δ*f*₁, and the subcarrier spacing of the second BWP is Δ*f*₂*.*

10. The method according to any one of claims 1 to 9, wherein the first uplink signal and/or the second uplink signal are used to calculate an uplink channel quality indicator CQI, and the scheduling information is determined based on the CQI or the first uplink signal.

11. A signal transmission method, wherein the method comprises:
sending first indication information, wherein the first indication information is used to indicate a frequency domain resource occupied by at least one first uplink signal;
receiving at least one first uplink signal in a first BWP;
receiving at least one second uplink signal within the second BWP;
wherein the frequency domain resource of the first BWP is different from the frequency domain resource of the second BWP.

12. The method according to claim 11, wherein the transmit power of the first uplink signal is determined based on the number of subcarriers and/or the subcarrier spacing included in the first BWP and the second BWP.

13. The method according to claim 12, wherein the method further comprises:
sending configuration information, wherein the configuration information comprises the number of subcarriers and/or the subcarrier spacing of the first BWP.

14. The method according to any one of claims 11 to 13, wherein the method further comprises:
sending second indication information, wherein the second indication information indicates the frequency domain resource occupied by the first BWP.

15. The method according to any one of claims 11 to 14, wherein the method further comprises:
sending third indication information, wherein the third indication information indicates scheduling information of a third uplink signal.

16. The method according to claim 15, wherein the method further comprises:
receiving the third uplink signal within the first BWP.

17. The method according to any one of claims 11 to 16, wherein
a transmit power of the first uplink signal is P1, a transmit power of the second uplink signal is P2, a difference between the transmit power of the first uplink signal and the transmit power of the second uplink signal is ΔP, and ΔP=P1-P2.

18. The method according to claim 17, wherein a difference between the transmit power of the first uplink signal and the transmit power of the second uplink signal ΔP satisfies the formula: $ΔP = 10 log 10 \left(\frac{Δ {f}_{1}}{Δ {f}_{2}}\frac{{N}_{RE}^{{BWP}_{1}}}{{N}_{RE}^{{BWP}_{2}}}\right) dB$ The subcarrier spacing of the first BWP is Δ*f*₁*,* and the subcarrier spacing of the second BWP is Δ*f*₂*.*

19. The method according to any one of claims 11 to 18, wherein the first uplink signal and/or the second uplink signal are used to calculate an uplink channel quality indicator CQI, and the scheduling information is determined based on the CQI or the first uplink signal.

20. A communication apparatus, wherein the communication apparatus comprises a processor, wherein the processor is coupled to a memory, the memory is configured to store computer-executable instructions, and the processor is configured to execute the instructions stored in the memory; and when the instructions are run by the processor, the communication apparatus is enabled to perform the method according to claims 1 to 10.

21. A communication apparatus, wherein the communication apparatus comprises a processor, the processor is coupled to a memory, the memory is configured to store computer-executable instructions, and the processor is configured to execute the instructions stored in the memory; and when the instructions are run by the processor, the communication apparatus is enabled to perform the method according to any one of claims 11 to 19.

22. A computer-readable storage medium, wherein a computer program is stored on the medium, and when the computer program is executed by a computer, the method according to any one of claims 1 to 10 or claims 11 to 19 is performed.

23. A communication system, wherein the communication system comprises a terminal device and a network device; the terminal device is configured to perform the method according to any one of claims 1 to 10; and the network device is configured to perform the method according to any one of claims 11 to 19.
